# EUROPEAN PATENT APPLICATION

(11) **EP 3 208 950 A1**
(43) Date of publication of application: **23.08.2017**
(21) Application number: 16305194.9
(22) Date of filing: 19.02.2016
(51) Int. Cl.: H04B 7/185

(54) **CONNECTED OBJECTS COMMUNICATION SYSTEM**

(71) Applicant: UNIVERSITE DE MONTPELLIER, 34090 Montpellier (FR)
(72) Inventor: RAMI, Karim, 34570 Pignan (FR); SAIGNÉ, Frédéric, 34570 Murviel les Montpellier (FR); DUSSEAU, Laurent, 34980 Saint-Gély-du-Fesc (FR)
(74) Representative: Gevers & Orès

(57) **Abstract**

The invention proposes an loT communication system based on a mobile gateway provided with a plurality of low power radio modules to allow communicating with connected objects according to a plurality of protocols. The mobile gateway is able to forward data received from the connected objects to a nano-satellite for a transmission to a ground station connected to the central server.

## Description

The present invention concerns a method and a device for the transmission of information from connected objects to a central server.

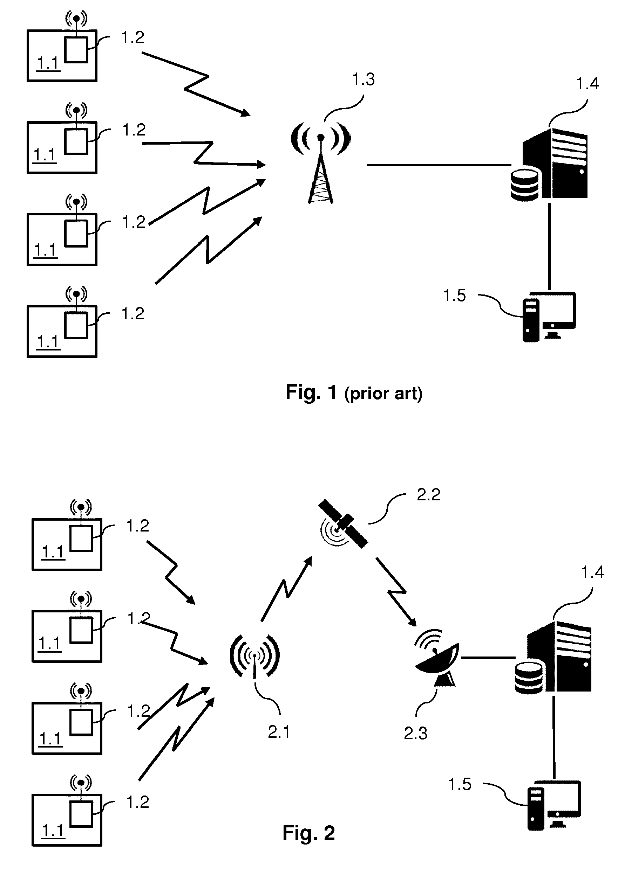

The development of connected object, also known as Internet of things or IoT, is thriving pushed by a number of operational solutions. The architecture of these solutions are quite similar and are illustrated on **Figure 1****.**

These solutions provide objects **1.1** with a radio communication module **1.2**. These objects may be of any kind as, for example, packages which delivery is wanted to be tracked, sensors for the watching of sensitive installations, containers and so on.

The radio communication module **1.2** communicates using different possible protocols depending on the service provider of the IoT solution with a ground network of cellular transceiver stations **1.3**. This ground network of cellular transceiver stations **1.3** is similar to the network operating the mobile phone systems. Actually, some of the IoT solutions are based on mobile phone network infrastructure. In this case the IoT solution may use directly the mobile phone system for connexion or the IoT protocol may be added as a supplementary function to the mobile phone transceivers.

Data transmitted from the objects to the ground network of cellular transceiver stations are forwarded to a central server **1.4** typically operated by the IoT service provider. This central server collects the data and allows the client operating the objects to access to collected data from a client information system **1.5**.

The communication protocol between the radio communication module **1.2** provided to the object and the ground transceiver **1.3** is not standardized. Several protocols are operated by the service providers, one can cite Sigfox, LoRa, 6lowPan, Zigbee among others. The communication from objects to the central server **1.4** may happen regularly for status reports for example, or asynchronously to transmit alert messages for example. As a general rule, it is not possible to predict the moment of emission of a data message emitted by an object to the central server **1.4**.

The ground network of cellular transceiver stations 1.3 covers a certain geographical area. While objects are circulating within the covered area, the communication with the central server 1.4 is possible. When the object is leaving the covered area, the communication is lost. For example, if a boat filled with connected containers crosses an ocean, no communication is possible from the connected containers to the central server during navigation. This means that any alert from the containers will not reach the central server until the boat arrives in an harbour covered by the ground network. For obvious economic reasons, some large terrestrial area are not covered either by the ground network like desert or mountains. The extension of usages of IoT would greatly benefit from a solution to enable communication from connected objects circulating in areas not covered by the ground network.

The present invention has been devised to address one or more of the foregoing concerns.

The invention proposes an IoT communication system based on a mobile gateway provided with a plurality of low power radio modules to allow communicating with connected objects according to a plurality of protocols. The mobile gateway is able to forward data received from the connected objects to a nano-satellite for a transmission to a ground station connected to the central server.

The invention concerns a gateway for the transmission of messages, characterized in that said gateway comprises:
- a plurality of radio reception modules for the reception of messages from messages emitting sources, each messages emitting source emitting messages according to a given protocol, each radio reception module being configured to receive messages according to one of said protocols;
- at least a storage module to store received messages;
- a satellite transmission module to send said received messages to a satellite.

According to an embodiment, the gateway further comprises:
- an energy saving module to control the regular wakeup of each radio reception module, the periodicity and the duration of the wakeup being adapted to ensure the reception of all emitted message.

According to an embodiment, said satellite not being always visible from the gateway, the gateway further comprises:
- a global positioning system module for the computation of the location of the gateway and for providing an indication of the current time; and
- a visibility module for the computation of windows of transmission from the location of the gateway, the current time and a stored information relative to the trajectory of said satellite.

According to an embodiment, the gateway further comprises:
- a category module to analyse stored message and attribute a category from a predefined plurality of categories;
- a priority module to attribute a level of priority to each category of message; and wherein
- the satellite transmission module is adapted to transmit messages according to the priority of the category of the message.

According to an embodiment, the gateway further comprises:
- a wired transmission module adapted to transmit at least some of the messages through a wired transmission protocol.

The invention also concerns a connected objects communication system, comprising:
- at least a gateway according to the invention for receiving messages from connected objects; and
- at least a nano-satellite for retransmitting messages received from said gateways to a central server via a ground station.

Embodiments of the invention will now be described, by way of example only, and with reference to the following drawings in which:
**Figure 1** illustrates a typical IoT system architecture according to the prior art;
**Figure 2** illustrates the IoT system according to an embodiment of the invention;
**Figure 3** illustrates the mobile gateway architecture in an embodiment of the invention;
**Figure 4** illustrates the low power radio communication module architecture in the mobile gateway according to an embodiment of the invention;
**Figure 5** illustrates the satellite radio module in the mobile gateway according to an embodiment of the invention.

**Figure 2** illustrates the IoT system according to an embodiment of the invention.

The proposed architecture is based on a mobile gateway **2.1** that is intended to follow connected objects as they circulate outside the covered area of the ground network. The mobile gateway **2.1** is provided with a plurality of radio modules to enable the communication real time with connected objects according to the majority, if not all, the radio communication protocols used by service providers. Accordingly, the mobile gateway is compatible with the vast majority of existing connected objects. The mobile gateway is also provided with a nano-satellite radio communication module to communicate with a nano-satellite **2.2.**

The nano-satellite **2.2** forward messages from the connected objects received from the mobile gateway to a ground station **2.3**. The ground station **2.3** is connected to the central server **1.4.**

Using a nano-satellite for the communication from the mobile gateway to the ground station allows the connected objects to communicate from everywhere on earth. There are no more non covered area as long as connected objects stay close enough to a mobile gateway. For example, providing the boat transporting connected containers with a mobile gateway allows the containers to communicate with the central server during all the navigation across oceans. Similarly, mobile gateways may be provided in faraway areas, in the middle of deserts or in mountains, to enable connected objects to communicate.

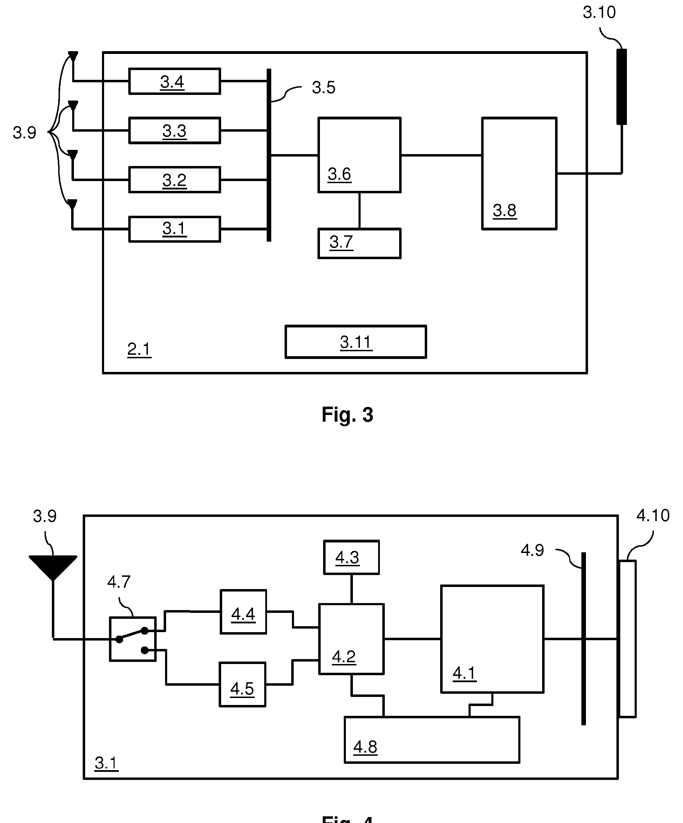

**Figure 3** illustrates the mobile gateway **2.1** architecture in an embodiment of the invention.

The mobile gateway is provided with a plurality of radio communication modules **3.1** to **3.4**. Each radio communication module is connected to an antenna **3.9** in order to communicate with connected object. Each radio communication module is dedicated to a given radio communication protocol, for example Sigfox, 6LowPan, LoRa, Zigbee, BLE, IEEE 802.15.4 and so on. Data messages emitted by connected objects are received by the antenna and decoded by the low power radio communication module according to the used protocol. All radio communication modules are connected to a multiplexed bus **3.5**. For example a I2C (Inter-Integrated Circuit) bus, the CAN (Controller Area Network) bus, the FlexRay bus and also the PCI Express bus. A processor **3.6** along with its storage **3.7** is also connected to the multiplexed bus **3.5**. The processor **3.6** is responsible for all needed digital treatment of the received data messages. The internal scheduling is used to achieve real time.

Also connected to the processor, a satellite radio communication module **3.8** with a dedicated antenna **3.10** allows communications with a nano-satellite. . The antenna **3.10** is an omnidirectional antenna with a high gain. The mobile gateway is alimented with a battery **3.11** which provides energy to all the components of the mobile gateway. The battery **3.11** is managed by the processor in order to limit to the minimum the consumption of the mobile gateway.

All the IoT dedicated protocols are using ISM (Industrial, Scientific and Medical) radio bands which are internationally reserved for the use of radio frequency (RF) energy for industrial, scientific and medical purposes. According to these protocols, data messages are emitted by connected objects, using a frequency in ISM radio band, for example ZigBee uses 868 MHz, 915 MHz and 2.4 GHZ, LoRa uses 169 MHz, 433 MHz, 868 MHz and 915 MHz, BLE uses 2.4 GHz, Sigfox uses 868 MHz. Filters and powers will be adapted to respect the radio standards, for example in Europe the RED Directive (Radio Equipement Directive) and particularly the EN 300 220 for the radiocommunication Sub-1 GHz.

Data messages are sent as data frames beginning with a synchronisation word and containing an identifier of the actual protocol being used. Based on the used frequency and this identifier the dedicated radio communication module is able to identify and decode data frames and send to the processor the received data messages. The modular architecture of the mobile gateway allows rendering the gateway compatible with all IoT protocols. If a new protocol is deployed, adding a new radio communication module to the mobile gateway brings the compatibility with the new protocol.

The processor is provided with a TCP/IP stack. It is responsible for sorting and storing data messages within the storage unit **3.7.** Then the data messages are packed using a dedicated satellite protocol to be sent using TCP/IP to the central server **1.4** through the nano satellite **2.2** and the ground station **2.3**.

**Figure 4** illustrates the radio communication module architecture in the mobile gateway according to an embodiment of the invention.

The Low power radio communication module **2.1** is controlled by a micro-controller **4.1**. The micro-controller **4.1** is connected to a multiplexed bus **4.9,** for example a FlexRay bus, a CAN bus, I2C bus or PCI Express bus, which is itself connected to a connector **4.10** to be plugged in the mobile gateway. The micro-controller is responsible for handling the protocol stack dedicated to the IoT protocol and the management of the whole module.

The micro-controller **4.1** is also connected to the radio-frequency transceiver **4.2**. The transceiver 4.2 is handling the radio-frequency and make the link between the physical layer and the digital one. The transceiver **4.2** is scheduled by a quartz clock **4.3**. Connected to the transceiver **4.2** we have a transmission path composed by the matching module **4.4**. We also have a reception path composed by the matching module **4.5**. Both the reception and the transmission path are connected to a switch **4.7** which allows connecting each path alternatively to the antenna **3.9** to put the radio communication module in transmission or reception mode. Both mode cannot be handled at the same time. The antenna **3.9** is adapted to the frequency used by the IoT module. Matching modules **4.4** and **4.5** are, for example, composed by a capacity and a self to adapt the radio-frequency path to avoid losses. The radio communication module is fed in energy by the power module **4.8**.

One of the functions of the micro-controller **4.1** is to recognize the data messages received by the transceiver that matches the IoT protocol handled by the radio communication module. Once data messages corresponding to the IoT protocol are recognized, the micro-controller builds from the signal the data frame that has been transmitted to send it to the processor of the mobile gateway through the multiplexed bus.

While all radio communication modules have the same architecture, they have to be adapted to the targeted IoT protocol. Typically, the antenna should be adapted to the radio band(s) used by the targeted IoT protocol. The transceiver **4.2** is also specific to the targeted IoT protocol along with the protocol stack implemented on the micro-controller **4.1** for the data frame reconstruction.

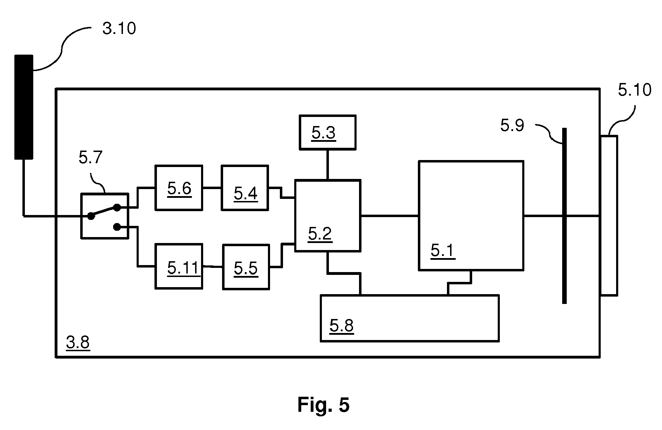

**Figure 5** illustrates the satellite radio module in the mobile gateway according to an embodiment of the invention.

The satellite radio module shares the same global architecture with the radio communication module. It comprises similar components adapted for satellite communication, the connector **5.10**, the multiplexed bus **5.9**, the micro-controller **5.1**, the transceiver **5.2**, the quartz clock **5.**3, the radio switch **5.7**, the power module 5.8 and the antenna **3.10**.

The transmission path comprises a matching module **5.4** and a power amplifier **5.6** to get an output power approximately of 15 watts to address the satellite. The reception path comprises a matching module **5.5** and a Low Noise Amplifier **5.11** to increase the sensitivity of the receiver.

The contemplated satellite is a nano-satellite, meaning a satellite that weighs less than 10 kg. The preferred embodiment uses a nano-satellite, a Cubesat, constituted by a cube of 10 by 10 by 10 cm with a weight of less than one kilogram. The design and launch of such satellite is in a price range compatible with the economy of IoT. A complete constellation of nano-satellites is needed to offer a permanent coverage to mobile gateways deployed on earth. But the system becomes operational with only one nano-satellite sweeping the planet. In that case, the mobile gateway has to store data messages received from connected object until getting a window of time for their transmission to the satellite. In order to be able to compute these windows of time the mobile gateway is advantageously provided with a GPS to know its exact position on earth precisely and to be able to synchronize its clock with the clock received from the GPS satellites. By having data and tools of NORAD (North American Aerospace Defense Command) , for example space-track and celestrak set of data, that defines the orbit of the nano-satellite allows a visibility module in the mobile gateway to precisely compute the windows of time where the satellite is accessible for transmission. The visibility module is typically implemented by the processor of the mobile gateway.

The nano-satellite also implements a store and forward policy. The received data messages are stored and kept until the ground station is in line of sight for transmission. The ground station forward the data messages to the central server. It is therefore clear that the number of operating satellites plays a role in the delay of transmission from the connected object to the central server. While a complete constellation of satellites allows the data messages to be transmitted without noticeable delays, the use of a single satellite may introduce several hours of delay. Data messages may be transmitted from satellite to satellite in order to speed up the transmission to the ground station. It avoids having to wait that the first receiving satellite is in view of the ground station for the forward of the data messages.

It may be advantageous to implement a sorting and filtering policy at the mobile gateway. For example, it is possible to determine a priority level to the data messages according to their nature. An alarm data message will get a high priority level while a routine status data message will get a low priority. It may be decided to transmit only high priority data messages, or first the high priority messages and then the low priority messages. This kind of policy may allow to operate with a low number of satellite a high number of connected objects without overwhelming the storage capacity of both mobile gateways and satellite. For example, a category module analyses stored message and attributes a category from a predefined plurality of categories. Then a priority module attributes a level of priority to each category of message. The category and priority modules are typically implemented by the processor of the mobile gateway.

The mobile gateway being intended to be autonomous, the power management of this mobile gateway is critical. The base power source is a battery. In order to improve the life time of the battery, a sleeping policy with regular reawakening of the radio reception path and processor might be implemented. The IoT protocols provides a repetition of the transmission of data messages. Each data message is transmitted at least three times with a given delay between each transmission. Based on the knowledge of these delays, it is possible to compute the duration of the sleep period and the duration of the awake period to ensure that all data messages emitted by connected objects are received while allowing the mobile gateways to have sleeping period in order to save energy. For example, waking up the mobile gateway for a few microseconds every second permit to guarantee the reception of data messages from connected objects. The periodicity and the duration of the wakeup is adapted to ensure the reception of all emitted message. The power management policy is typically implemented using a dedicated micro-controller which is always awake and control the sleep period of the other components of the mobile gateway.

In some embodiments, the mobile gateway may be provided with a further wired interface for network connection. This may allow to deploy mobile gateway in area where wired connection is available and to choose to use the satellite connection, the wired connection and even a mix of the two, for example for redundancy reason for sensitive data. The mode of transmission, wired, satellite or both may be done dynamically based on the type of data message to transmit.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A gateway for the transmission of messages, **characterized in that** said gateway comprises:
- a plurality of radio reception modules for the reception of messages from messages emitting sources, each messages emitting source emitting messages according to a given protocol, each radio reception module being configured to receive messages according to one of said protocols;
- at least a storage module to store received messages;
- a satellite transmission module to send said received messages to a nano-satellite.

2. The gateway according to claim 1, **characterized in that** it further comprises:
- an energy saving module to control the regular wakeup of each radio reception module, the periodicity and the duration of the wakeup being adapted to ensure the reception of all emitted message.

3. The gateway according to claim 1 or 2, **characterized in that**, said satellite not being always visible from the gateway, the gateway further comprises:
- a global positioning system module for the computation of the location of the gateway and for providing an indication of the current time; and
- a visibility module for the computation of windows of transmission from the location of the gateway, the current time and a stored information relative to the trajectory of said satellite.

4. The gateway according to any previous claims, **characterized in that** it further comprises:
- a category module to analyse stored message and attribute a category from a predefined plurality of categories;
- a priority module to attribute a level of priority to each category of message; and wherein
- the satellite transmission module is adapted to transmit messages according to the priority of the category of the message.

5. The gateway according to any previous claim, **characterized in that** it further comprises:
- a wired transmission module adapted to transmit at least some of the messages through a wired transmission protocol.

6. A connected objects communication system, **characterized in that** it comprises:
- at least a gateway according to any claim from 1 to 5 for receiving messages from connected objects; and
- at least a nano-satellite for retransmitting messages received from said gateways to a central server via a ground station.
